# EUROPEAN PATENT APPLICATION

(11) **EP 4 726 819 A1**
(43) Date of publication of application: **15.04.2026**
(21) Application number: 23940981.6
(22) Date of filing: 12.06.2023
(51) Int. Cl.: H01M 10/04, H01M 50/586, H01M 50/595, H01M 50/463

(54) **ELECTROCHEMICAL APPARATUS AND ELECTRIC DEVICE INCLUDING SAME**

(71) Applicant: Ningde Amperex Technology Limited, Ningde, Fujian 352100 (CN)
(72) Inventor: JIANG, Nan, Ningde, Fujian 352100 (CN); ZENG, Qiao, Ningde, Fujian 352100 (CN); YAN, Dongyang, Ningde, Fujian 352100 (CN)
(74) Representative: Dehns Germany Partnerschaft mbB
(86) International application number: PCT/CN2023/099742
(87) International publication number: WO 2024/254743

(57) **Abstract**

An electrochemical apparatus and an electric device including the same are provided. The electrochemical apparatus includes a housing, an electrode assembly, a first insulating layer, and an electrolyte, where the electrode assembly and the electrolyte are accommodated in the housing. The electrode assembly includes a plurality of electrode plates stacked along a first direction and a first separator disposed between the plurality of electrode plates. The electrode assembly further includes a first surface and a second surface opposite each other in the first direction, and a first end face connecting the first surface and the second surface. The first insulating layer is adhered to the first surface, the second surface, and the first end face. The first separator includes a substrate layer and a plurality of first coatings spaced apart on a surface of the substrate layer facing an adjacent electrode plate.

## Description

### TECHNICAL FIELD

This application relates to the field of energy storage apparatuses, and in particular, to an electrochemical apparatus and an electric device including the same.

### BACKGROUND

Electrochemical apparatuses (for example, lithium-ion batteries) are widely applied to electric vehicles and consumer electronic products due to their advantages such as high energy density, high output power, long cycle life, and little environmental pollution. However, electrochemical apparatuses may encounter safety issues such as fire upon abnormal conditions such as squeezing, collision or puncture.

### SUMMARY

An objective of this application is to propose a battery with good cycling performance and capable of reducing the risk of internal short circuits in electrochemical apparatuses.

This application provides an electrochemical apparatus, including a housing, an electrode assembly, a first insulating layer, and an electrolyte. The electrode assembly and the electrolyte are accommodated in the housing. The electrode assembly includes a plurality of electrode plates stacked along a first direction and first separators disposed between the plurality of electrode plates. The electrode assembly further includes a first surface and a second surface opposite each other in the first direction, as well as a first end face connected between the first surface and the second surface. The first insulating layer is adhered to all the first surface, the second surface, and the first end face. The first separator includes a substrate layer, and first coatings spaced apart on a surface of the substrate layer facing an adjacent electrode plate.

In this application, the first insulating layer is connected to the first surface, the second surface, and the first end face of the electrode assembly, where the first insulating layer constrains the electrode assembly in the first direction, reducing the risk of internal short circuits caused by shrinkage of the first separator, thereby improving the safety performance. However, constraining the electrode assembly in the first direction with the first insulating layer may reduce a gap between the first separator and an adjacent electrode plate, reducing space available for electrolyte transport and leading to poor electrolyte infiltration. This application provides a first separator including a plurality of first coatings spaced apart, where a gap between two adjacent first coatings reserves space for electrolyte transport, improving an electrolyte infiltration effect, and mitigating lithium precipitation issues on the electrode plate caused by poor electrolyte infiltration, thereby improving the cycling performance. Therefore, the electrochemical apparatus of this application achieves high cycling performance while maintaining the safety.

In some possible implementations, the first coating is strip-shaped, the substrate layer includes two side edges opposite each other in a second direction perpendicular to the first direction, and the plurality of first coatings are obliquely arranged with respect to the side edges. Thus, the adhesive strength between the first coating and the adjacent electrode plate is continuously distributed across each edge of the electrode assembly, enhancing the deformation resistance of the electrode assembly and improving the cycling performance.

In some possible implementations, when viewed in the first direction, an included angle between the first coating and the side edge is θ₁, where 25°≤θ₁≤65°. When the included angle θ₁ is within this range, the adhesive strength between the first coating and the edge of the electrode plate can be maintained, suppressing edge deformation of the electrode plate, thereby improving the cycling performance.

In some possible implementations, when viewed in the first direction, a width of the first coating is D₁, and a spacing between two adjacent first coatings is D₂, where 0.3D2≤D₁≤0.5D₂. When D₁>0.5D₂, upon a fixed electrode plate area, a smaller D₂ reduces the space available for electrolyte transport, which causes poor electrolyte infiltration, exacerbating lithium precipitation issues on the electrode plate, and affecting the cycling performance. When D₁<0.3D₂, an adhesion area between the first coating and the electrode plate is reduced, the adhesive strength is reduced, and the deformation resistance is reduced accordingly, affecting the cycling performance.

In some possible implementations, the first separator further includes a plurality of second coatings, the plurality of second coatings are spaced apart on a surface of the substrate layer facing away from the plurality of first coatings. A gap between two adjacent second coatings reserves space for electrolyte transport, improving the electrolyte infiltration effect, and further mitigating lithium precipitation issues on the electrode plate caused by poor electrolyte infiltration, thereby improving the cycling performance.

In some possible implementations, the first coatings and the second coatings are spatially interdigitated, such that gaps between adjacent first coatings and gaps between adjacent second coatings are staggered, further improving the electrolyte infiltration effect and further mitigating lithium precipitation issues on the electrode plate caused by poor electrolyte infiltration, thereby improving the cycling performance.

In some possible implementations, the first separator further includes a plurality of first portions located among a plurality of electrode plates, as well as a second portion and a third portion located outside the plurality of electrode plates and opposite each other in the first direction, and each first portion is disposed between two adjacent electrode plates. The plurality of first portions, the second portion, and the third portion are integrally disposed to form a wound structure. The first separator is configured as a wound structure, constraining the plurality of electrode plates in a plurality of different directions, without providing an additional insulating layer to constrain the plurality of electrode plates in specific directions. Furthermore, the first insulating layer is connected to the second portion and the third portion of the first separator, increasing the adhesive strength between the first insulating layer and the electrode assembly, and reducing the risk of detachment of the first insulating layer, thereby reducing the risk of internal short circuits caused by shrinkage of the first separator.

In some possible implementations, in a third direction perpendicular to both the first direction and the second direction, a width of the electrode assembly is W₁, and a width of the first insulating layer is W₂, where 0.7W₁≤W₂≤W₁. When the width W₁ of the electrode assembly and the width W₂ of the first insulating layer are within this range, the adhesive strength between the first insulating layer and the first end face can be maintained, reducing the risk of internal short circuits caused by shrinkage of the first separator, thereby improving the safety performance.

In some possible implementations, 0.7W₁≤W₂≤0.95W₁. In some possible implementations, 0.85W₁≤W₂≤0.95W₁.

In some possible implementations, the first coating includes a first inorganic particle layer and a first adhesive layer, the first inorganic particle layer is connected to the substrate layer, and the adhesive layer is disposed on a surface of the inorganic particle layer facing away from the substrate layer and is adhered to an adjacent electrode plate. The first adhesive layer is adhered to the electrode plate, enhancing the interfacial adhesive strength between the first separator and the electrode plate, reducing swelling deformation caused by gas generation inside the electrochemical apparatus, and improving the cycling performance.

In some possible implementations, the first coating includes inorganic particles and a binder.

In some possible implementations, the electrochemical apparatus further includes a second insulating layer, the electrode assembly further includes a second end face connected between the first surface and the second surface, a length direction of the electrode assembly is defined as the second direction, the first surface and the second surface are opposite each other in the second direction, and the second insulating layer is connected to all the first surface, the second surface, and the second end face. Connecting the second insulating layer to the first surface, the second surface, and the second end face of the electrode assembly reduces the risk of internal short circuits caused by shrinkage of one end of the first separator close to the second end face.

In some possible implementations, the first insulating layer is a single-sided adhesive or a double-sided adhesive.

In some possible implementations, the second insulating layer is a single-sided adhesive or a double-sided adhesive.

In some possible implementations, the electrochemical apparatus further includes a first metal plate and a second metal plate, and the first metal plate and the second metal plate are both connected to the electrode assembly. In a third direction perpendicular to the first direction, the electrode assembly further includes a second end face opposite the first end face, and the first metal plate and the second metal plate extend out of the electrode assembly from the second end face.

In some possible implementations, the housing is a packaging bag.

This application further provides an electric device, including any one of the electrochemical apparatuses described above.

### BRIEF DESCRIPTION OF DRAWINGS

The above and/or additional aspects and advantages of this application will become apparent and readily understood from the description of embodiments in conjunction with the following drawings.
FIG. 1 is a first-direction view of an electrochemical apparatus according to an embodiment of this application;
FIG. 2 is a first-direction view of an electrode assembly of the electrochemical apparatus shown in FIG. 1, observed from a side where a first surface is located;
FIG. 3 is a first-direction view of the electrode assembly shown in FIG. 2, observed from a side where a second surface is located;
FIG. 4 is a second-direction view of the electrode assembly shown in FIG. 2;
FIG. 5 is a cross-sectional view of the electrode assembly shown in FIG. 2 along line V-V;
FIG. 6 is a cross-sectional view of the electrode assembly shown in FIG. 4 along line VI-VI;
FIG. 7 is a first-direction view of a first separator of the electrode assembly shown in FIG. 6, observed from a side close to a first surface of the electrode assembly;
FIG. 8 is a first-direction view of the first separator shown in FIG. 7, observed from a side close to a second surface of the electrode assembly;
FIG. 9 is a first-direction view of a first separator according to another embodiment of this application;
FIG. 10 is a second-direction view of an electrode assembly according to still another embodiment of this application;
FIG. 11 is a second-direction view of an electrode assembly according to yet another embodiment of this application; and
FIG. 12 is a schematic structural diagram of an electric device according to an embodiment of this application.

Description of reference signs of main components:

| | |
|---|---|
| electrochemical apparatus | 100 |
| housing | 10 |
| electrode assembly | 20 |
| first metal plate | 30 |
| second metal plate | 40 |
| first separator | 23 |
| first electrode plate | 21 |
| second electrode plate | 22 |
| first current collector | 211 |
| first active material layer | 212 |
| second current collector | 221 |
| second active material layer | 222 |
| first surface | 201 |
| second surface | 202 |
| second end face | 203 |
| first end face | 204 |
| first side face | 205 |
| second side face | 206 |
| first insulating layer | 50 |
| fourth insulating layer | 60 |
| third insulating layer | 70 |
| second insulating layer | 80 |
| substrate layer | 231 |
| first coating | 232 |
| gap | G1, G2, G3 |
| first inorganic particle layer | 232a |
| first adhesive layer | 232b |
| side edge | 231a |
| second coating | 233 |
| second inorganic particle layer | 233a |
| second adhesive layer | 233b |
| second portion | 23b |
| third portion | 23c |
| second separator | 24 |
| electric device | 1 |
| first direction | Z |
| second direction | Y |
| third direction | X |

### DESCRIPTION OF EMBODIMENTS

The technical solutions in the embodiments of this application are described clearly in detail below. It is apparent that the described embodiments are some rather than all of the embodiments of this application. Unless otherwise defined, all technical and scientific terms used herein have the same meaning as commonly understood by those skilled in the technical field of this application. The terms used in the specification of this application are for the purpose of describing specific embodiments only and are not intended to limit this application.

The embodiments of this application are described in detail below. However, this application may be embodied in many different forms and should not be construed as being limited to the exemplary embodiments set forth herein. Rather, these exemplary embodiments are provided to thoroughly and completely convey this application to those skilled in the art.

In addition, for brevity and clarity, the dimensions or thicknesses of various components and layers in the drawings may be exaggerated. Throughout the specification, the same reference numerals refer to the same elements. It should also be understood that when an element A is referred to as being "connected" to an element B, element A may be directly connected to element B, or there may be an intermediate element C, and element A and element B may be indirectly connected to each other.

Further, in the description of the embodiments of this application, the term "may" refers to "one or more embodiments of this application".

The technical terms used herein are for the purpose of describing specific embodiments and are not intended to limit this application. As used herein, singular forms are intended to include plural forms as well, unless clearly indicated otherwise in the context. It should be understood that the term "include", when used in this specification, refers to the presence of the stated features, values, steps, operations, elements, and/or components, but does not preclude the presence or addition of one or more other features, values, steps, operations, elements, components, and/or combinations thereof. It should be understood that, although the terms such as first, second, and third may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below may be referred to as a second element, component, region, layer, or section without departing from the instruction of the exemplary embodiments.

In this application, "a plurality of" refers to two or more.

In this application, the electrochemical apparatus includes any apparatus in which an electrochemical reaction takes place, and specific examples thereof include all types of primary batteries, secondary batteries, fuel cells, solar cells, or capacitors. For example, the electrochemical apparatus is a lithium secondary battery, and the lithium secondary battery may include a lithium metal secondary battery, a lithium-ion secondary battery, a lithium polymer secondary battery, or a lithium-ion polymer secondary battery.

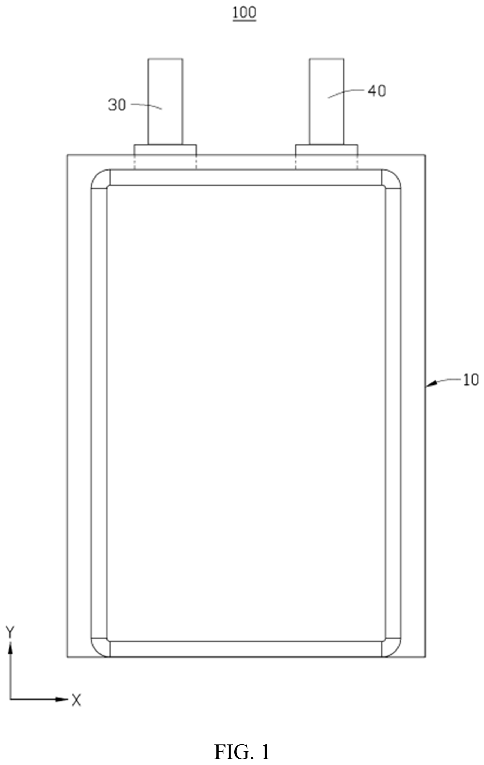

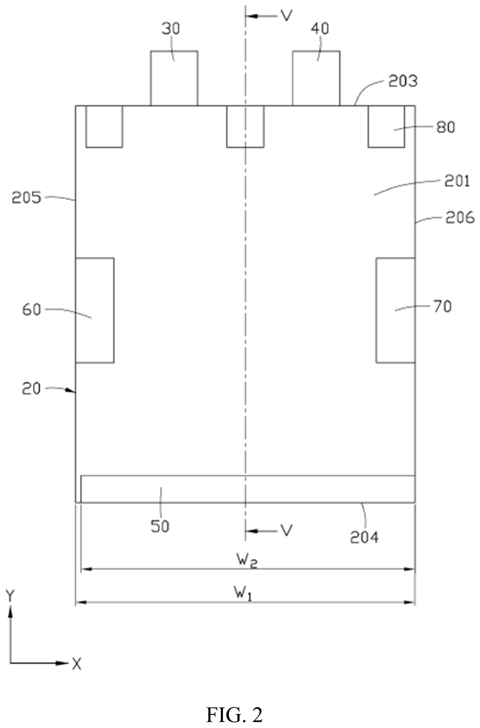

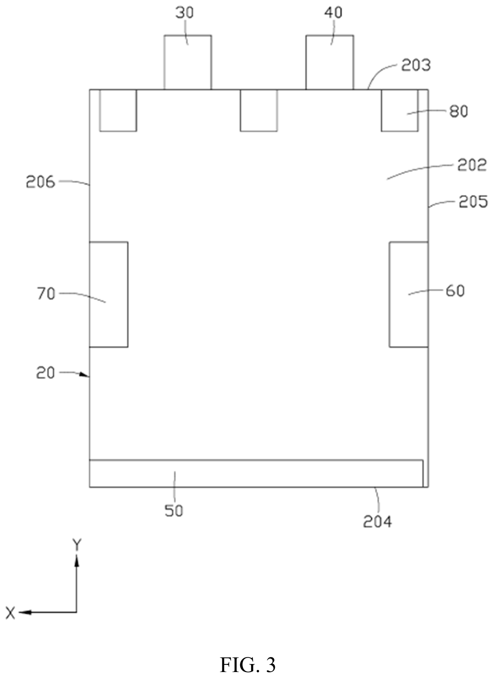

Referring to FIG. 1, an embodiment of this application provides an electrochemical apparatus 100, including a housing 10, an electrode assembly 20 (shown in FIG. 2 and FIG. 3) and an electrolyte that are accommodated in the housing 10, a first metal plate 30, and a second metal plate 40. In some embodiments, the housing 10 is a metal housing, such as a steel housing or an aluminum housing. In some other embodiments, the housing 10 is a packaging bag formed by sealing an encapsulation film, that is, the electrochemical apparatus 100 may be a pouch battery. FIG. 2 and FIG. 3 show that the electrochemical apparatus 100 includes one electrode assembly 20. In some other embodiments, to achieve high voltage output, the electrochemical apparatus 100 includes a plurality of electrode assemblies 20.

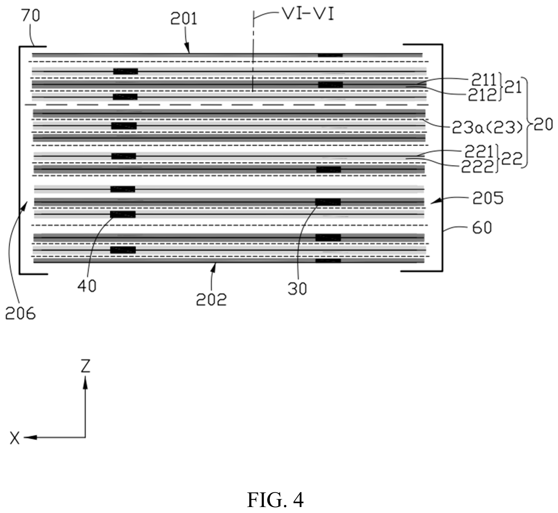

As shown in FIG. 4, the electrode assembly 20 includes a plurality of electrode plates and first separators 23 disposed among the plurality of electrode plates. The plurality of electrode plates are stacked along a first direction Z to form a stacked structure. In this embodiment, the first direction Z refers to a thickness direction of the electrode assembly 20. The plurality of electrode plates include a first electrode plate 21 and a second electrode plate 22 with opposite polarities. The first separator 23 is disposed between a first electrode plate 21 and a second electrode plate 22 adjacent to each other, to reduce the risk of short circuits caused by direct contact between the first electrode plate 21 and the second electrode plate 22.

The first metal plate 30 and the second metal plate 40 are electrically connected to the electrode assembly 20 and extend out of the housing 10 to be connected to external components (not shown in the figure). Specifically, the first electrode plate 21 includes a first current collector 211 and a first active material layer 212, the first active material layer 212 is disposed on at least one surface of the first current collector 211, and the first metal plate 30 is electrically connected to the first current collector 211. The second electrode plate 22 includes a second current collector 221 and a second active material layer 222, the second active material layer 222 is disposed on at least one surface of the second current collector 221, and the second metal plate 40 is electrically connected to the second current collector 221.

In some embodiments, the first electrode plate 21 is a positive electrode plate, and the second electrode plate 22 is a negative electrode plate. Specifically, the first current collector 211 includes at least one of Ni, Ti, Cu, Ag, Au, Pt, Fe, Al, and compositions thereof. The first active material layer 212 includes a positive electrode active material. The positive electrode active material may include at least one of lithium cobalt oxide, lithium manganese oxide, lithium nickel oxide, lithium nickel cobalt manganese oxide, lithium iron phosphate, lithium iron manganese phosphate, lithium vanadium phosphate, lithium vanadium oxide, a lithium-rich manganese-based material, lithium nickel cobalt aluminate, and a composition thereof. The second current collector 221 includes at least one of Ni, Ti, Cu, Ag, Au, Pt, Fe, Al, and a composition thereof. The second active material layer 222 includes a negative electrode active material. The negative electrode active material may be selected from at least one of a graphite-based material, an alloy-based material, lithium metal, and an alloy thereof. The graphite-based material may be selected from at least one of artificial graphite and natural graphite; and the alloy-based material may be selected from at least one of silicon, silicon oxide, tin, and titanium sulfide.

Referring to FIG. 2 to FIG. 4, the electrode assembly 20 further includes a first surface 201, a second surface 202, a second end face 203, a first end face 204, a first side face 205, and a second side face 206. The first surface 201 and the second surface 202 are opposite each other in a first direction Z. In the first direction Z, surfaces of two outermost electrode plates among the plurality of electrode plates serve as the first surface 201 and the second surface 202, respectively. In some embodiments, surfaces of current collectors of the two outermost electrode plates among the plurality of electrode plates serve as the first surface 201 and the second surface 202. The second end face 203 and the first end face 204 are opposite each other in a second direction Y and are connected between the first surface 201 and the second surface 202. The first metal plate 30 and the second metal plate 40 extend from the second end face 203. The first metal plate 30 and the second metal plate 40 may directly extend out of the housing 10, or may be connected to another metal plate, and this another metal plate extends out of the housing 10. The first side face 205 and the second side face 206 are opposite each other in a third direction X and are connected between the first surface 201 and the second surface 202. In this application, the third direction X refers to a width direction of the electrode assembly 20, and the second direction Y refers to a length direction of the electrode assembly 20, where the second direction Y is also a direction in which the first metal plate 30 and the second metal plate 40 extend out, and the first direction Z, the third direction X, and the second direction Y are perpendicular to each other.

The first separator 23 includes at least one first portion 23a disposed in the plurality of electrode plates. In some embodiments, the first separator 23 includes a plurality of first portions 23a, and each first portion 23a is configured to separate a first electrode plate 21 and a second electrode plate 22 adjacent to each other. The plurality of first portions 23a are separately arranged, to be specific, the plurality of first portions 23a are configured as separate separators. In this case, the electrode assembly 20 is obtained by alternately stacking the first electrode plate 21, the first portions 23a, and the second electrode plate 22. An edge of the first portion 23a of the first separator 23 extends beyond edges of the electrode plates in both the third direction X and the second direction Y to separate the adjacent first electrode plate 21 and second electrode plate 22. End faces of two sides of the first portion 23a of the first separator 23 in the second direction Y serve as the second end face 203 and the first end face 204, respectively, and end faces of two sides the first portion 23a of the first separator 23 in the third direction X serve as the first side face 205 and the second side face 206, respectively.

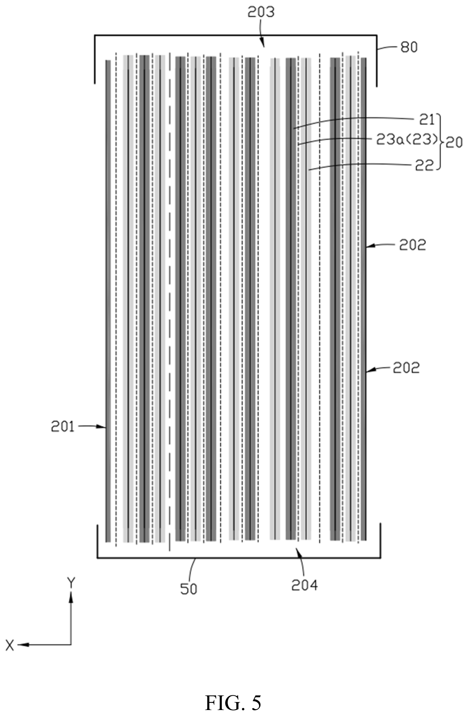

Referring to FIG. 2, FIG. 3, and FIG. 5, the electrochemical apparatus 100 further includes a first insulating layer 50. The first insulating layer 50 is substantially sheet-shaped, covering at least a portion of the first surface 201, at least a portion of the second surface 202, and at least a portion of the first end face 204, and is adhered to all the first surface 201, the second surface 202, and the first end face 204. In FIG. 5, the first insulating layer 50 is connected to surfaces, serving as the first surface 201 and the second surface 202, of current collectors of the two electrode plates. The first insulating layer 50 constrains the electrode assembly 20 in the first direction Z and the second direction Y, reducing the risk of short circuits caused by contact between the first electrode plate 21 and the second electrode plate 22 due to shrinkage of the first portion 23a of the first separator 23 close to the first end face 204 in the second direction Y during thermal abuse or mechanical abuse, and also reducing stress on the first end face 204 during a drop, thereby reducing the risk of electrode plate damage.

Referring to FIG. 2 and FIG. 3, a width of the electrode assembly 20 in the third direction X is defined as W₁, and a width of the first insulating layer 50 in the third direction X is defined as W₂, where 0.7W₁≤W₂≤W₁. When W₂<0.7W₁, the width of the first insulating layer 50 is small, and a connection area between the first insulating layer 50 and the first end face 204 is small, that is, a connection area between the first insulating layer 50 and the first separator 23 is small, which makes the first separator 23 prone to shrinkage during hot box and drop tests, leading to internal short circuits. In some embodiments, W₂≤0.95W₁, which is conducive to balancing the tolerance for arranging the first insulating layer 50 during manufacturing and improving the electrolyte infiltration effect at the first end face 204.

Referring to FIG. 2 to FIG. 4, in some embodiments, the electrochemical apparatus 100 further includes a fourth insulating layer 60 and a third insulating layer 70. The fourth insulating layer 60 is substantially sheet-shaped, covering at least a portion of the first surface 201, at least a portion of the second surface 202, and at least a portion of the first side face 205, and is connected to all the first surface 201, the second surface 202, and the first side face 205. The fourth insulating layer 60 constrains the electrode assembly 20 in the first direction Z and the third direction X, reducing the risk of shrinkage of an end of the first portion 23a of the first separator 23 close to the first side face 205 in the third direction X. The third insulating layer 70 is substantially sheet-shaped, covering at least a portion of the first surface 201, at least a portion of the second surface 202, and at least a portion of the second side face 206, and is connected to all the first surface 201, the second surface 202, and the second side face 206. The third insulating layer 70 constrains the electrode assembly 20 in the first direction Z and the third direction X, reducing the risk of shrinkage of an end of the first portion 23a of the first separator 23 close to the second side face 206 in the third direction X.

Referring to FIG. 2, FIG. 3, and FIG. 5, in some embodiments, the electrochemical apparatus 100 further includes a second insulating layer 80. The second insulating layer 80 is substantially sheet-shaped, covering at least a portion of the first surface 201, at least a portion of the second surface 202, and a portion of the second end face 203, and is connected to all the first surface 201, the second surface 202, and the second end face 203. The second insulating layer 80 constrains the electrode assembly 20 in the first direction Z and the second direction Y, reducing the risk of shrinkage of an end of the first portion 23a of the first separator 23 close to the second end face 203 in the second direction Y. In these embodiments, the electrochemical apparatus 100 includes three second insulating layers 80, where one second insulating layer 80 is disposed between the first metal plate 30 and the second metal plate 40, one second insulating layer 80 is disposed between the first metal plate 30 and the first side face 205, and one second insulating layer 80 is disposed between the second metal plate 40 and the second side face 206, thereby increasing a connection area between the second insulating layer 80 and the second end face 203, maintaining the adhesive strength between the second insulating layer 80 and the second end face 203, and further reducing the risk of shrinkage of the end of the first portion 23a of the first separator 23 close to the second end face 203.

In some embodiments, the first insulating layer 50, the fourth insulating layer 60, the third insulating layer 70, and the second insulating layer 80 are all adhesive and adhered to the electrode assembly 20. Materials of the first insulating layer 50, the fourth insulating layer 60, the third insulating layer 70, and the second insulating layer 80 may each be a single-sided adhesive or a double-sided adhesive.

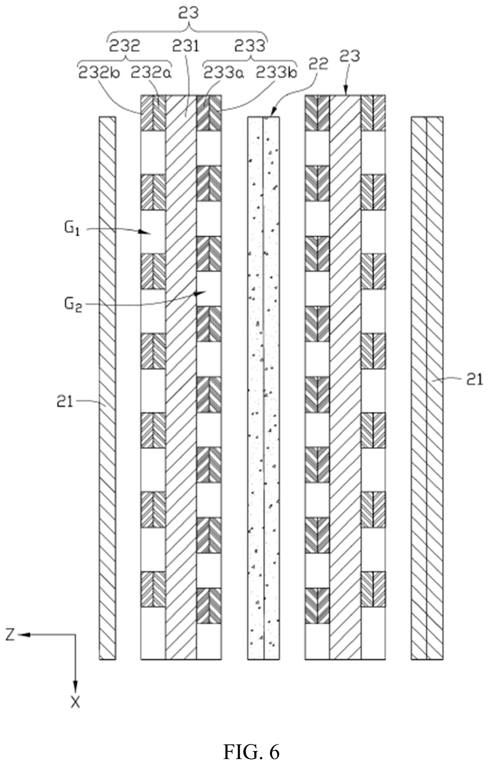

Referring to FIG. 6, the first separator 23 has a laminated film structure. Specifically, the first separator includes a substrate layer 231 and a plurality of first coatings 232 spaced apart on one surface of the substrate layer 231, where the first coating 232 is adhered to the first electrode plate 21. In another embodiment, the first coating 232 may alternatively be adhered to the second electrode plate 22. A gap G₁ exists between two adjacent first coatings 232. The gaps G₁ among the plurality of first coatings 232 reserve space for electrolyte transport, allowing the electrolyte to flow through the gaps G₁ and fully infiltrate the electrode plate after electrolyte injection. In this case, even if the first insulating layer 50 is provided to constrain the electrode assembly 20 in the first direction Z and the second direction Y, the electrolyte can still infiltrate the electrode plate through the gaps G₁.

In one embodiment, the first coating 232 includes a first inorganic particle layer 232a and a first adhesive layer 232b stacked together. The first inorganic particle layer 232a is in connected to the substrate layer 231, the first adhesive layer 232b is disposed on a surface of the first inorganic particle layer 232a facing away from the substrate layer 231, and the first separator 23 is adhered to an adjacent electrode plate through the first adhesive layer 232b. The first adhesive layer 232b may be adhered to the electrode plate, enhancing the interfacial adhesive strength between the first separator 23 and the electrode plate and reducing swelling deformation caused by gas generation inside the electrochemical apparatus 100, that is, enhancing the deformation resistance of the electrochemical apparatus 100 and reducing the risk of deformation and structural damage of the electrode assembly 20, thereby improving the cycling performance of the electrochemical apparatus 100.

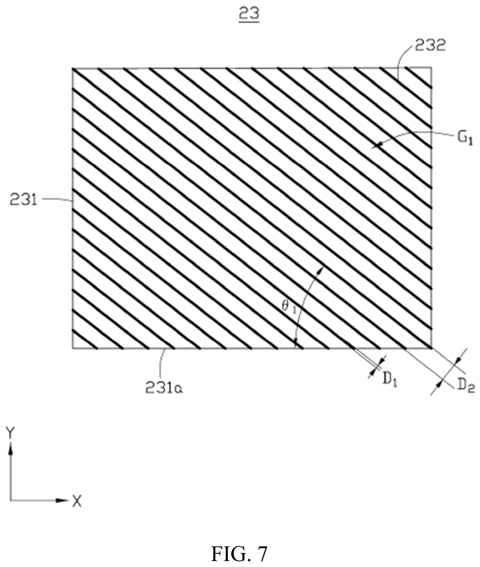

Referring to FIG. 7, the first coating 232 is strip-shaped and disposed on a surface of the substrate layer 231, and the plurality of first coatings 232 are arranged parallel to each other. The substrate layer 231 includes two side edges 231a opposite each other in the second direction Y. An included angle between the first coating 232 and the side edge 231a is θ₁. The first coating 232 is obliquely disposed with respect to the side edge 231a, to be specific, 0°<θ₁<90°, so that the adhesive strength between the first coating 232 and the electrode plate is continuously distributed across edges of the electrode assembly in the second direction Y and the third direction X, enhancing the deformation resistance of the electrode assembly and improving cycling performance. In some embodiments, 25°≤θ₁≤65°, which maintains the adhesive strength between the first coating 232 and the electrode plate edge and suppresses edge deformation of the electrode plate, thereby improving the cycling performance. When θ₁<25°, since the first coating 232 is aligned to the third direction X, the adhesivity between the first separator 23 and the electrode plate in the second direction Y may decrease, potentially causing deformation of the edge of the electrode assembly 20 in the third direction X, thereby affecting the cycle life. When θ₁>65°, since the first coating 232 is aligned to the second direction Y, the adhesivity between the first separator 23 and the electrode plate in the third direction X may decrease, potentially causing deformation of the edge of the electrode assembly 20 in the second direction Y, thereby affecting the cycle life.

As shown in FIG. 7, in some embodiments, when viewed along the first direction Z, a width of the first coating 232 is D₁, and a spacing between two adjacent first coatings 232 is D₂, where D₁ and D₂ satisfy: 0.3D₂≤D₁≤0.5D₂. When D₁>0.5D₂, upon a fixed electrode plate area, a smaller D₂ reduces the space available for electrolyte transport, which causes poor electrolyte infiltration, resulting in lithium precipitation issues on the electrode plate, and affecting the cycling performance. When D₁<0.3D₂, an adhesion area between the first coating 232 and the electrode plate is reduced, the adhesive strength is reduced, the deformation resistance is reduced accordingly, affecting cycling performance.

As shown in FIG. 6, in some embodiments, the first separator 23 further includes a plurality of second coatings 233 spaced apart on one surface of the substrate layer 231, with the substrate layer 231 located between the first coating 232 and the second coating 233. When the first coating 232 is adhered to the first electrode plate 21, the second coating 233 is adhered to the second electrode plate 22. A gap G₂ exists between two adjacent second coatings 233, serving as a channel for electrolyte transport. Thus, the provision of the second coating 233 further improves the electrolyte infiltration effect, further reducing lithium precipitation issues on the electrode plate caused by poor electrolyte infiltration, thereby improving the cycling performance.

The second coating 233 includes a second inorganic particle layer 233a and a second adhesive layer 233b stacked together. The second inorganic particle layer 233a is in connected to the substrate layer 231, and the second adhesive layer 233b is disposed on a surface of the second inorganic particle layer 233a facing away from the substrate layer 231.

In some embodiments, the substrate layer 231 includes a polymer film, a multilayer polymer film, or a non-woven fabric formed from any one or a mixture of two or more of the following polymers: polyolefin, polyvinylidene fluoride, polyethylene terephthalate, cellulose, polyimide, polyamide, spandex, and poly-paraphenylene terephthalamide. These polymers have high thermal stability and are easily subjected to surface treatment, facilitating the application of the first coating 232 and the second coating 233 on the substrate layer 231. Additionally, these polymers have good toughness and are easy to bend.

The first inorganic particle layer 232a and the second inorganic particle layer 233a each include an inorganic particle material, where the inorganic particle material includes at least one of boehmite particles, aluminum hydroxide particles, or magnesium hydroxide particles. The first inorganic particle layer 232a and the second inorganic particle layer 233a may further include a binder, where the binder adheres the inorganic particle material together. The binder may include polyvinylidene fluoride or a copolymer of vinylidene fluoride-hexafluoropropylene.

The first adhesive layer 232b and the second adhesive layer 233b each include an adhesive material, where the adhesive material includes at least one of the following polymers: a copolymer of vinylidene fluoride-hexafluoropropylene, a copolymer of vinylidene fluoride-trichloroethylene, polymethyl methacrylate, polyacrylic acid, polyacrylate, polyacrylonitrile, polyvinylpyrrolidone, polyvinyl acetate, a copolymer of ethylene-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, sodium carboxymethyl cellulose, lithium carboxymethyl cellulose, a copolymer of acrylonitrile-styrene-butadiene, polyvinyl alcohol, polyvinyl ether, polytetrafluoroethylene, polyhexafluoropropylene, a copolymer of styrene-butadiene, or polyvinylidene fluoride. These polymers can provide strong adhesion, adhering the first separator 23 to the first electrode plate 21 or the second electrode plate 22.

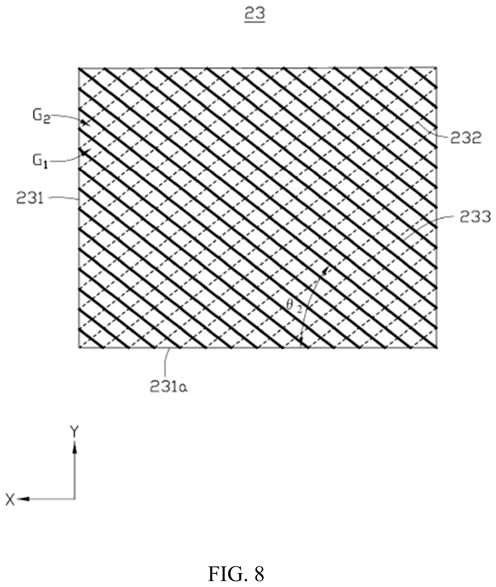

Referring to FIG. 8, in some embodiments, the second coating 233 is strip-shaped, and the plurality of second coatings 233 are arranged parallel to each other. An included angle between the second coating 233 and the side edge 231a is θ₂. The second coating 233 is obliquely disposed with respect to the side edge 231a, to be specific, 0°<θ₂<90°. In some embodiments, 25°≤θ₂≤65°, which maintains the adhesive strength between the second coating 233 and the electrode plate edge and further suppresses edge deformation of the electrode plate, thereby improving the cycling performance. When θ₂<25°, since the second coating 233 is aligned to the third direction X, the adhesivity between the first separator 23 and the electrode plate in the second direction Y may decrease, potentially causing deformation of the edge of the electrode assembly 20 in the third direction X, thereby affecting the cycle life. When θ₂>65°, since the second coating 233 is aligned to the second direction Y, the adhesivity between the first separator 23 and the electrode plate in the third direction X may decrease, potentially causing deformation of the edge of the electrode assembly 20 in the second direction Y, thereby affecting cycle life.

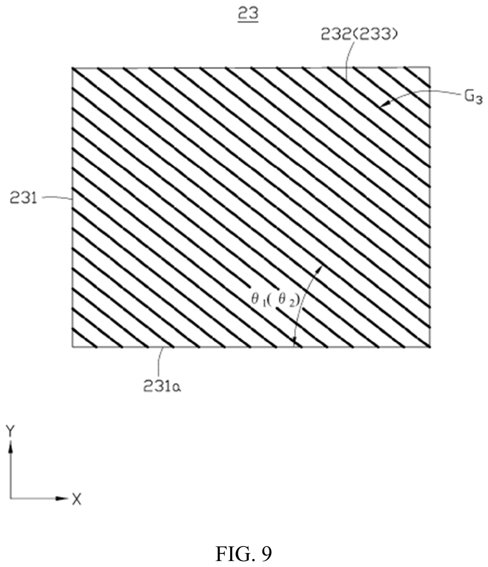

As shown in FIG. 8, the first coating 232 and the second coating 233 are spatially interdigitated, with an included angle between the first coating 232 and the second coating 233 being θ₃, where 0°<θ₃<180°. Thus, the gaps G₁ among the plurality of first coatings 232 and the gaps G₂ among the plurality of second coatings 233 are staggered, further improving the electrolyte infiltration effect. As shown in FIG. 9, in another embodiment, the first coating 232 and the second coating 233 may alternatively be arranged parallel to each other. In this case, the included angle θ₁ between the first coating 232 and the side edge 231a is equal to the included angle θ₂ between the second coating 233 and the side edge 231a.

Referring to FIG. 9, the first coatings 232 or the second coatings 233 may be discontinuously disposed, for example, being disposed as a plurality of blocks or a plurality of islands on the surface of the substrate layer 231. In this case, the included angle θ₁ between the first coating 232 and the side edge 231a refers to an included angle between a line connecting the plurality of block portions or island portions and the side edge 231a, and the included angle θ₂ between the second coating 233 and the side edge 231a refers to an included angle between a line connecting the plurality of block portions or island portions and the side edge 231a. Gaps G₃ are also provided within the first coatings 232 discontinuously disposed or the second coatings 233 discontinuously disposed, capable of serving as channels for electrolyte transport, thereby further improving electrolyte transport performance.

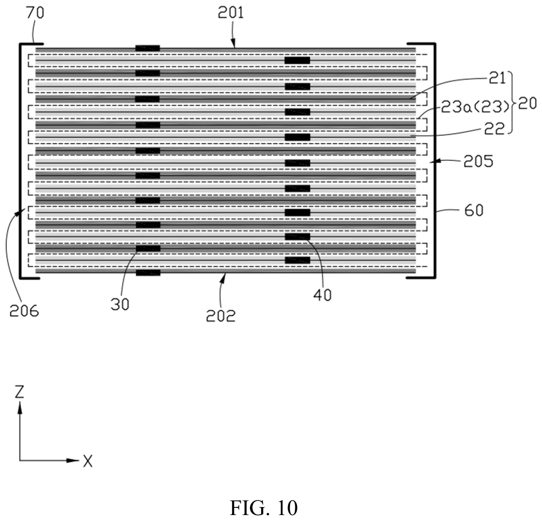

Referring to FIG. 10, in another embodiment, the plurality of first portions 23a of the first separator 23 are disposed, that is, the first separator 23 is integrally disposed. The first separator 23 has a Z-shaped folded structure. Specifically, in the first direction Z, the first separator 23 is bent in a Z-shape to form the Z-shaped folded structure. The first separator 23 with the Z-shaped folded structure has only two end portions, reducing the risk of internal short circuits caused by shrinkage of the first separator 23, thereby improving the safety performance.

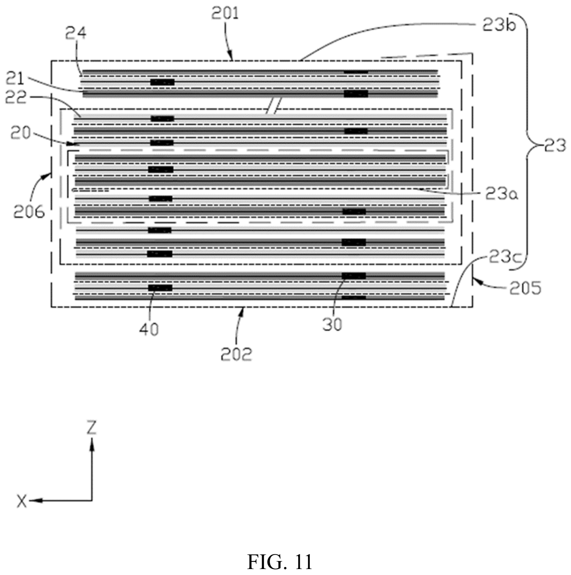

Referring to FIG. 11, in another embodiment, the first separator 23 further includes a second portion 23b and a third portion 23c located outside the plurality of electrode plates and opposite each other in the first direction Z, where a surface of the second portion 23b facing away from the electrode plates serves as the first surface 201 of the electrode assembly 20, which is connected to the first insulating layer, and a surface of the third portion 23c facing away from the electrode plates serves as the second surface 202 of the electrode assembly 20, which is connected to the first insulating layer. The plurality of first portions 23a, the second portion 23b, and the third portion 23c of the first separator 23 are integrally formed to form a wound structure, with the plurality of electrode plates located within the wound structure. Specifically, the first separator 23 is wound around one of its ends in the second direction Y to sequentially wind every n electrode plates to form the wound structure, where n is an integer greater than or equal to 1. That is, n electrode plates are disposed between every two adjacent first portions 23a. FIG. 11 shows that three electrode plates are disposed between two adjacent first portions 23a. When n is greater than or equal to 2, second separators 24 are disposed among the plurality of electrode plates between two adjacent first portions 23a. The second separator 24 is made of an insulating material to prevent short circuits caused by direct contact between the plurality of electrode plates between two adjacent first portions 23a. The material of the second separator 24 may include at least one of polyolefin, polyvinylidene fluoride, polyethylene terephthalate, cellulose, polyimide, polyamide, spandex, or poly-paraphenylene terephthalamide.

The integrally formed first separator 23 is configured as a wound structure, allowing the entire first separator 23 to constrain the plurality of electrode plates in the first direction Z and the third direction X, without providing additional second insulating layer and third insulating layer to constrain the electrode assembly 20 in the first direction Z and the third direction X. As compared to a solution of providing a second insulating layer and a third insulating layer to constrain the electrode assembly 20 in the first direction Z and the third direction X, the first separator 23 configured as a wound structure provides weaker constraint on the edges of the electrode plates in the third direction X, helping the electrolyte to flow through the edges of the electrode plates in the third direction X and fully infiltrate the electrode plates. Furthermore, the first separator 23 includes the second portion 23b and the third portion 23c located outside the plurality of electrode plates, and the first insulating layer 50 is connected to the second portion 23b and the third portion 23c of the first separator 23. A surface roughness of the first separator 23 is greater than a surface roughness of the current collector of the electrode plate, increasing the adhesive strength between the first insulating layer 50 and the electrode assembly 20, thereby reducing the risk of detachment of the first insulating layer 50.

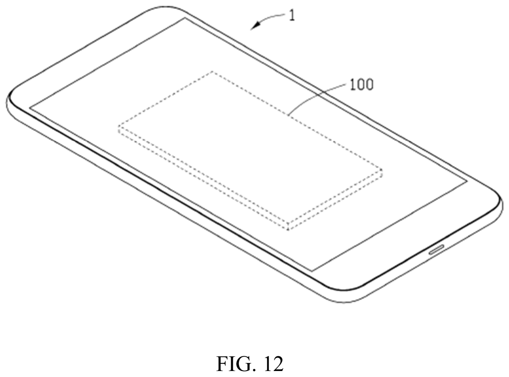

Referring to FIG. 12, an embodiment of this application further provides an electric device 1. The electric device 1 includes the electrochemical apparatus 100 described above. The electric device 1 of this application may be, but is not limited to, a laptop computer, a pen-input computer, a mobile computer, an e-book reader, a portable phone, a portable fax machine, a portable copier, a portable printer, a head-mounted stereo headset, a video recorder, a liquid crystal display television, a portable cleaner, a portable CD player, a mini-disc player, a transceiver, an electronic organizer, a calculator, a memory card, a portable recorder, a radio, a backup power source, a motor, an automobile, a motorcycle, an electric bicycle, a bicycle, a lighting device, a toy, a game console, a clock, an electric tool, a flashlight, a camera, a large household storage battery, or a lithium-ion capacitor.

The following provides a detailed description of this application through specific examples and comparative examples. An example in which the electrochemical apparatus is a pouch battery is used to describe this application in conjunction with specific preparation processes and testing methods. Those skilled in the art should understand that the preparation methods described in this application are only examples, and any other suitable preparation methods are within the scope of this application.

### Example 1

A slurry formed by mixing an inorganic particle material and a binder was intermittently applied onto a surface of a substrate layer to form a plurality of first inorganic particle layers spaced apart, and then an adhesive material was applied onto surfaces of the plurality of first inorganic particle layers to form a plurality of first adhesive layers, to obtain a plurality of first coatings spaced apart. Subsequently, the slurry formed by mixing the inorganic particle material and the binder was intermittently applied onto another surface of the substrate layer to form a plurality of second inorganic particle layers spaced apart, and then the adhesive material was applied onto surfaces of the plurality of second inorganic particle layers to form a plurality of second adhesive layers, to obtain a plurality of second coatings spaced apart, thereby obtaining a first separator. A width D₁ of the first coating and a distance D₂ between two adjacent first coatings satisfied a relationship D₁=0.3D₂, and an included angle θ₁ between the first coating and a side edge of the substrate layer was 45°.

The first separator and a plurality of electrode plates were wound to obtain an electrode assembly, where the first separator had a wound structure, three electrode plates were disposed between two adjacent first portions of the first separator, and surfaces of a second portion and a third portion of the first separator facing away from the electrode plates served as a first surface and a second surface of the electrode assembly. A first insulating layer was adhered to the first surface, the second surface, and a second end face of the electrode assembly, where a width W₂ of the first insulating layer and a width W₁ of the electrode assembly satisfied a relationship: W₂=0.8W₁.

The electrode assembly and an electrolyte were encapsulated in an aluminum-plastic film to obtain an electrochemical apparatus.

### Examples 2 to 13

Examples 2 to 13 differed from Example 1 in that at least one of a value of D₁/D₂, a value of W₂/W₁, and a value of the included angle θ₁ was different.

### Comparative Example 1

Comparative Example 1 differed from Example 1 in that the slurry was continuously applied onto a surface of the substrate layer to form a first inorganic particle layer and a second inorganic particle layer, and the slurry was continuously applied onto a surface of the first inorganic particle layer and a surface of the second inorganic particle layer to form a first adhesive layer. To be specific, the plurality of first coatings and the plurality of second coatings spaced apart in Example 1 were integrally connected, respectively.

Cycling tests were performed on the electrochemical apparatuses of Comparative Example 1 and Examples 1 to 10, 12, and 13, with the test results recorded in Table 1. Steps of the cycling tests included: at 45°C, the electrochemical apparatus was charged to 4.43 V at a constant current of 1C, charged at a constant voltage to 0.05C, left standing for 5 min, and then discharged to 3.0 V at 0.7C. A discharge capacity at this time was measured using a commercially available battery performance tester, which was recorded as an initial discharge capacity of the electrochemical apparatus, denoted as 100%. The above charge-discharge steps were cycled 1000 times, and a ratio of the discharge capacity of the electrochemical apparatus after cycling to the initial capacity of the electrochemical apparatus was multiplied by 100%, to obtain a capacity retention rate. The electrochemical apparatus was fully charged according to a charging process and disassembled, and an interface condition and a lithium precipitation condition of a negative electrode plate were observed.

**Table 1**

| | W₂/W₁ | D₁/D₂ | θ₁ | Cycling capacity retention rate | Interface condition of negative electrode plate |
|---|---|---|---|---|---|
| Comparative Example 1 | 0.8 | / | / | 55% | Poor electrolyte infiltration, significant purple spots with lithium precipitation in main region |
| Example 1 | 0.8 | 0.3 | 45° | 88% | Good interface condition in main region, few purple spots with lithium precipitation in edge region |
| Example 2 | 0.8 | 0.4 | 45° | 85% | Good interface condition in main region, few purple spots with lithium precipitation in edge region |
| Example 3 | 0.8 | 0.5 | 45° | 86% | Good interface condition in main region, few purple spots with lithium precipitation in edge region |
| Example 4 | 0.7 | 0.4 | 45° | 83% | Good interface condition in main region, few purple spots with lithium precipitation in edge region |
| Example 5 | 0.85 | 0.4 | 45° | 88% | Good interface condition in main region, no purple spots with lithium precipitation in edge region |
| Example 6 | 1 | 0.4 | 45° | 88% | Good interface condition in main region, no purple spots with lithium precipitation in edge region |
| Example 7 | 0.8 | 0.4 | 25° | 83% | Good interface condition in main region, few purple spots with lithium precipitation in edge region |
| Example 8 | 0.8 | 0.4 | 65° | 82% | Good interface condition in main region, few purple spots with lithium precipitation in edge region |
| Example 9 | 0.8 | 0.2 | 45° | 67% | Poor interface condition caused by severe deformation of electrochemical apparatus, purple spots with lithium precipitation in main region |
| Example 10 | 0.8 | 0.6 | 45° | 63% | Poor electrolyte infiltration, purple spots with lithium precipitation in main region |
| Example 12 | 0.8 | 0.4 | 20° | 69% | Poor interface condition caused by long edge deformation, purple spots with lithium precipitation |
| Example 13 | 0.8 | 0.4 | 70° | 71% | Poor interface condition caused by wide edge deformation, purple spots with lithium precipitation |

From the comparison between Comparative Example 1 and Examples 1 to 10, 12, and 13, it can be seen that when a first insulating layer with a larger width is used to constrain the electrode assembly in the first direction, continuous application of the first coating and the second coating on two surfaces of the substrate layer leads to serious poor electrolyte infiltration, resulting in occurrence of significant purple spots with lithium precipitation in the main region of the electrode plate (a region close to the center of the electrode plate), thereby affecting the lifespan of the electrochemical apparatus. In contrast, intermittent application of the first coating and the second coating on two surfaces of the substrate layer reserves gaps between adjacent first coatings and adjacent second coatings for electrolyte transport, improving the electrolyte infiltration effect and extending the lifespan of the electrochemical apparatus. Therefore, Comparative Example 1 has the lowest cycling capacity retention rate.

From the comparison between Examples 1 to 3 and Examples 9 and 10, it can be seen that when 0.3D₂≤D₁≤0.5 is satisfied, the negative electrode plate has a good interface condition after cycling, and the electrochemical apparatus has a high capacity retention rate. When D₁ is too small, an adhesion area between the first separator and the electrode plate is too small, reducing the overall mechanical strength of the electrochemical apparatus, and easily causing deformation during cycling which leads to a poor interface condition. When D₁ is too large, the space reserved for electrolyte transport on the first separator is too small, leading to poor infiltration and consequently resulting in a poor interface condition.

From the comparison between Examples 2, 7, 8, 12, and 13, it can be seen that when 25°≤θ₁≤65° is satisfied, the negative electrode plate has a good interface condition after cycling, and the electrochemical apparatus has a high capacity retention rate. When θ₁ is too small or too large, the edge of the electrode plate is prone to deformation, leading to a poor interface condition.

From the comparison between Examples 2 and Examples 4 to 6, it can be seen that when 0.7W₁≤W₂ is satisfied, the negative electrode plate has a good interface condition after cycling, and the electrochemical apparatus has a high capacity retention rate. As W₂/W₂ increases, the cycling capacity retention rate shows a trend of increasing first and then remaining constant, and when W₂ ≥ 0.85W₁, the electrochemical apparatus has a higher capacity retention rate.

Hot box tests were performed on the electrochemical apparatuses of Comparative Example 1, Example 2, and Example 14, with the test results recorded in Table 2. Steps of the hot box tests included: at 25±5°C, the electrochemical apparatus was charged to 4.43 V at a constant current of 0.2C, and then charged at a constant voltage to 0.01C. The electrochemical apparatus was heated at a rate of 5±2°C/min to 140±2°C and maintained for 60 min. Whether the electrochemical apparatus exhibited failure phenomena such as fire or explosion was observed. If no failure phenomena occurred, the electrochemical apparatus was considered to pass the hot box test; otherwise, the electrochemical apparatus failed to pass the test. The pass rates of 20 electrochemical apparatuses in the hot box test were statistically recorded. After the test, each electrochemical apparatus was disassembled to observe whether there was separator shrinkage.

**Table 2**

| | W₂/W₁ | D₁/D₂ | θ₁ | Hot box test pass rate | Phenomena after disassembly |
|---|---|---|---|---|---|
| Comparative Example 1 | 0.8 | / | / | 0% | Electrochemical apparatus caught fire, severe shrinkage of first separator was observed |
| Example 2 | 0.8 | 0.4 | 45° | 100% | Electrochemical apparatus did not catch fire, no significant shrinkage of first separator was observed |

From the comparison between Comparative Example 1 and Example 2, it can be seen that when surfaces of the second portion and the third portion of the first separator serve as the first surface and the second surface of the electrode assembly, that is, when the electrode assembly is terminated with the first separator, intermittently applying the first coating and the second coating onto two surfaces of the substrate layer improves the hot box test pass rate and mitigates shrinkage of the first separator.

Drop tests were performed on the electrochemical apparatuses of Examples 1 to 6, 9, and 11, with the test results recorded in Table 3. Steps of the drop tests included: at 25±5°C, the electrochemical apparatus was charged to 4.43 V at a constant current of 0.2C, and then charged at a constant voltage to 0.01C. The electrochemical apparatus was fixed to a drop test fixture and dropped 6 times sequentially from 6 surfaces of the drop test fixture at a height of 1.8 m. After each drop, whether the electrochemical apparatus was damaged was observed and an open-circuit voltage of the electrochemical apparatus was recorded. If the voltage was less than 3.0 V, the electrochemical apparatus was deemed failed. If no damage occurred and the open-circuit voltage was higher than 3.0 V, the electrochemical apparatus was deemed not failed, and the test was continued until the failed, and the number of drops after which the electrochemical apparatus failed was recorded. Subsequently, the electrochemical apparatus was disassembled for analysis, and whether there was separator shrinkage was observed.

**Table 3**

| | W₂/W₁ | D₁/D₂ | θ₁ | Number of failures after drop |
|---|---|---|---|---|
| Example 1 | 0.8 | 0.3 | 45° | 42 |
| Example 2 | 0.8 | 0.4 | 45° | 43 |
| Example 3 | 0.8 | 0.5 | 45° | 45 |
| Example 4 | 0.7 | 0.4 | 45° | 41 |
| Example 5 | 0.85 | 0.4 | 45° | 44 |
| Example 6 | 1 | 0.4 | 45° | 44 |
| Example 9 | 0.8 | 0.2 | 45° | 32 |
| Example 11 | 0.5 | 0.4 | 45° | 25 |

From the comparison between Examples 1-3 and Example 9, it can be seen that when 0.3D₂≤D₁≤0.5D₂ is satisfied, the electrochemical apparatus withstands more drops, indicating better drop resistance. When D₁ is too small, the adhesion area between the first separator and the electrode plate is small, limiting the overall constraining effect of the first separator on the electrode assembly, and increasing mutual impact between the electrode plates and between the electrode assembly and the housing, thereby easily leading to housing damage. Therefore, the electrochemical apparatus in Example 9 has the worst drop resistance.

From the comparison between Examples 2, 4-6, and 11, it can be seen that when 0.7W₁≤W₂ is satisfied, the electrochemical apparatus withstands more drops, indicating better drop resistance. In Example 11, W₂ is too small, leading to failure caused by shrinkage of the first separator during drops, with the fewest drops and the worst drop resistance.

The above disclosures are only preferred embodiments of this application and certainly cannot limit this application. Therefore, equivalent changes made in accordance with this application still fall within the scope of this application.

## Claims

1. An electrochemical apparatus, comprising:
a housing;
an electrode assembly, accommodated in the housing, wherein the electrode assembly comprises a plurality of electrode plates stacked along a first direction and first separators disposed between the plurality of electrode plates, and the electrode assembly further comprises a first surface and a second surface opposite each other in the first direction, as well as a first end face connected between the first surface and the second surface;
a first insulating layer adhered to all the first surface, the second surface, and the first end face; and
an electrolyte accommodated in the housing;
wherein the first separator comprises a substrate layer, and first coatings spaced apart on a surface of the substrate layer facing an adjacent electrode plate.

2. The electrochemical apparatus according to claim 1, wherein the first coating is strip-shaped; the substrate layer comprises two side edges opposite each other in a second direction perpendicular to the first direction; and a plurality of first coatings are obliquely arranged with respect to the side edges.

3. The electrochemical apparatus according to claim 2, wherein when viewed in the first direction, an included angle between the first coating and the side edge is θ ₁, wherein 25° ≤ θ ₁ ≤ 65°.

4. The electrochemical apparatus according to claim 2, wherein when viewed in the first direction, a width of the first coating is D₁, and a spacing between two adjacent first coatings is D₂, wherein 0.3D₂ ≤D₁≤0.5D₂.

5. The electrochemical apparatus according to claim 2, wherein the first separator further comprises a plurality of second coatings, and the plurality of second coatings are spaced apart on a surface of the substrate layer facing away from the plurality of first coatings.

6. The electrochemical apparatus according to claim 5, wherein the first coatings and the second coatings are spatially interdigitated.

7. The electrochemical apparatus according to claim 1, wherein the first separator comprises a plurality of first portions located among a plurality of electrode plates, as well as a second portion and a third portion located outside the plurality of electrode plates and opposite each other in the first direction; each of the first portions is disposed between two adjacent electrode plates; and the plurality of first portions, the second portion, and the third portion are integrally disposed to form a wound structure.

8. The electrochemical apparatus according to claim 1, wherein in a third direction perpendicular to the first direction, a width of the electrode assembly is W₁, and a width of the first insulating layer is W₂, wherein 0.7W₁≤W₂≤W₁.

9. The electrochemical apparatus according to claim 8, wherein 0.7W₁≤W₂≤0.95W₁.

10. The electrochemical apparatus according to claim 9, wherein 0.85W₁≤W₂≤0.95W₁.

11. The electrochemical apparatus according to claim 1, wherein the first coating comprises a first inorganic particle layer and a first adhesive layer; the first inorganic particle layer is connected to the substrate layer; and the adhesive layer is disposed on a surface of the inorganic particle layer facing away from the substrate layer and is adhered to an adjacent electrode plate.

12. The electrochemical apparatus according to claim 1, wherein the first coating comprises inorganic particles and a binder.

13. The electrochemical apparatus according to claim 1, wherein the electrochemical apparatus further comprises a second insulating layer; the electrode assembly further comprises a second end face connected between the first surface and the second surface; a length direction of the electrode assembly is defined as a second direction; the first surface and the second surface are opposite each other in the second direction; and the second insulating layer is connected to all the first surface, the second surface, and the second end face.

14. The electrochemical apparatus according to claim 13, wherein the first insulating layer is a single-sided adhesive or a double-sided adhesive, and/or the second insulating layer is a single-sided adhesive or a double-sided adhesive.

15. The electrochemical apparatus according to claim 1, wherein the electrochemical apparatus further comprises a first metal plate and a second metal plate; the first metal plate and the second metal plate are both connected to the electrode assembly; in a third direction perpendicular to the first direction, the electrode assembly further comprises a second end face opposite the first end face; and the first metal plate and the second metal plate extend out of the electrode assembly from the second end face.

16. The electrochemical apparatus according to claim 1, wherein the housing is a packaging bag.

17. An electric device, comprising the electrochemical apparatus according to any one of claims 1 to 16.
